# EUROPÄISCHE PATENTSCHRIFT

(11) **EP 1 833 714 B1**
(45) Veröffentlichungstag und Bekanntmachung des Hinweises auf die Patenterteilung: **23.04.2008**
(21) Anmeldenummer: 06705822.2
(22) Anmeldetag: 20.01.2006
(51) Int. Cl.: B62B 5/00

(54) **ECKPROTEKTOR**
CORNER PROTECTOR
DISPOSITIF DE PROTECTION DE COIN

(30) Priorität: 15.02.2005 DE 102005006710
(43) Veröffentlichungstag der Anmeldung: 19.09.2007
(73) Patentinhaber: Wanzl Metallwarenfabrik GmbH, 89336 Leipheim (DE)
(72) Erfinder: KNUPFER, Robert, 89171 Illerkirchberg (DE); SCHEFFLER, Hans, 89233 Neu-Ulm, Burlafingen (DE)
(86) Internationale Anmeldenummer: PCT/DE2006/000084
(87) Internationale Veröffentlichungsnummer: WO 2006/086938

(56) Entgegenhaltungen:
- DE-U1- 8 903 979
- DE-U1- 29 610 317
- US-A- 4 600 204

## Beschreibung

Die Erfindung betrifft einen Eckprotektor mit Befestigungsmitteln zum Anbringen an einer vertikalen Eckkante eines aus Gitterstäben gefertigten Korbes, der Bestandteil eines Einkaufswagens ist, wobei am Korb quer verlaufende Stäbe angeordnet sind.

Zum Stand der Technik zählt, wie in der US Patentschrift 4,600,204 beschrieben, ein Eckprotektor, der mittels einer zusätzlichen Halterung an der Eckkante des Korbes eines Einkaufswagens befestigt ist. Der Eckprotektor ist durch einen an der äußeren Oberfläche verlaufenden Stab befestigt. Das obere Ende des Stabes ist durch eine geschlossene Öse gebildet und am unteren Ende ist der Stab in einen unteren quer verlaufenden Stab eingehängt.

Zum Stand der Technik zählt auch die US Patenschrift 5,074,570 in der ein Eckprotektor beschrieben wird, der zur Befestigung mit Halterungen versehen ist, die den vertikalen Eckstab des Korbes eines Einkaufswagens umschließen.

Weiterhin ist im deutschen Gebrauchsmuster 89 03 979.3 ein Einkaufswagen mit einem Eckprotektor in Form einer Korbschutzecke beschrieben, der jeweils an dem Eckbereich des Korbes angeordnet ist und zusammen mit einem weiteren Eckprotektor zum Anbringen von großflächigen Werbeträgern dient. Die Korbschutzecke ist für diese Anforderung derart gestaltet, dass sie eine Hinterschneidung aufweist, die an dem der Korbstirnwand anliegenden Abschnitt angeordnet ist. Die Hinterschneidung jeder Korbschutzecke ist zur Aufnahme des Werbeträgers spiegelbildlich angeordnet und kann durch eine Abstufung ausgeführt sein oder eine Nut aufweisen. Jede Korbschutzecke ist mittels Schrauben durch Gegenhalter am Korb befestigt. Diese Schrauben erlauben einen Austausch der Korbschutzecken. Jedoch ist ein solcher Austausch relativ umständlich und zeitaufwendig.

Auch ist ein Eckprotektor in Form einer Korbschutzecke aus dem deutschen Gebrauchsmuster 78 25 188 bekannt. Die rollenartig geformte Korbschutzecke ist unlösbar mittels eines oberen und unteren Drahtes an einem Transportwagen befestigt ist. Die Korbschutzecke weist Bohrungen auf und ist auf einen unteren Bolzen gesetzt und in einen oberen Bolzen gesteckt und durch einen Abschlussdraht ortsfest verschweißt.

Weiterhin sind zweiteilige Protektoren bekannt, bei denen der eine Teil an den oberen Ecken eines Einkaufswagens angebracht ist und der andere Teil von außen an den quer verlaufenden Stäben des Korbes mittels Haken, die an den Protektoren angeformt sind, eingehängt ist.

Alle beschriebenen Arten von Eckprotektoren sind nicht zum Anbringen an Körben mit unterschiedlich hoch angeordneten vertikalen Gitterstäben geeignet. Ein Wechsel der Eckprotektoren und erneutes Anbringen an Korbtypen mit anderen Abständen zwischen den Gitterstäben ist nicht oder nur in umständlicher Weise möglich.

Einen weiteren Nachteil stellt der Überstand dar, der durch den Abstand des Eckprotektors von der Wand des Korbes gebildet ist. Beim Stapeln von Körben, die Bestandteile von Einkaufswagen sind, kann es daher zu einem unerwünscht großen Abstand zwischen den einzelnen Körben kommen.

Die Aufgabe der Erfindung besteht darin, einen Eckschutz der hier vorliegenden Art so weiterzuentwickeln, dass eine Befestigung auch bei unterschiedlichen Höhen oder Abständen der quer verlaufenden Gitterstäbe eines Korbes möglich ist.

Als Lösung der gestellten Aufgabe wird vorgeschlagen, dass ein Teil der Befestigungsmittel durch ein Raststück gebildet ist, das höhenverstellbar in mindestens einer am Eckprotektor vorgesehenen Führung angeordnet und zum Befestigen an einem der quer verlaufenden Stäbe des Korbes bestimmt ist.

Weitere Lösungsmerkmale sind in den Unteransprüchen formuliert.

Insbesondere liegt der Vorteil darin, dass das Raststück an der Führung in die gewünschte Höhe gebracht werden kann und daher ein Anbringen des Eckprotektors bei Körben mit quer verlaufenden Gitterstäben unterschiedlicher Höhen möglich ist.

Die Erfindung wird anhand von Ausführungsbeispielen näher erläutert. Es zeigt
Fig. 1 einen Eckprotektor in 3-D-Darstellung mit einem an einer Führung entlang höhenverstellbarem Raststück;
Fig. 2 den Eckprotektor mit Raststück in Draufsicht;
Fig. 3 den oberen Teil eines Eckprotektors in 3-D-Darstellung zum Einhängen in eine vertikale Eckkante;
Fig. 4 ein Raststück in 3-D-Darstellung eingerastet in einen quer verlaufendem Stab eines Korbes;
Fig. 5 den Eckprotektor in 3-D-Darstellung eingehängt in eine vertikale Eckkante eines Korbes sowie
Fig. 6 den Eckprotektor mit einem zweiten ortsfesten Raststück.

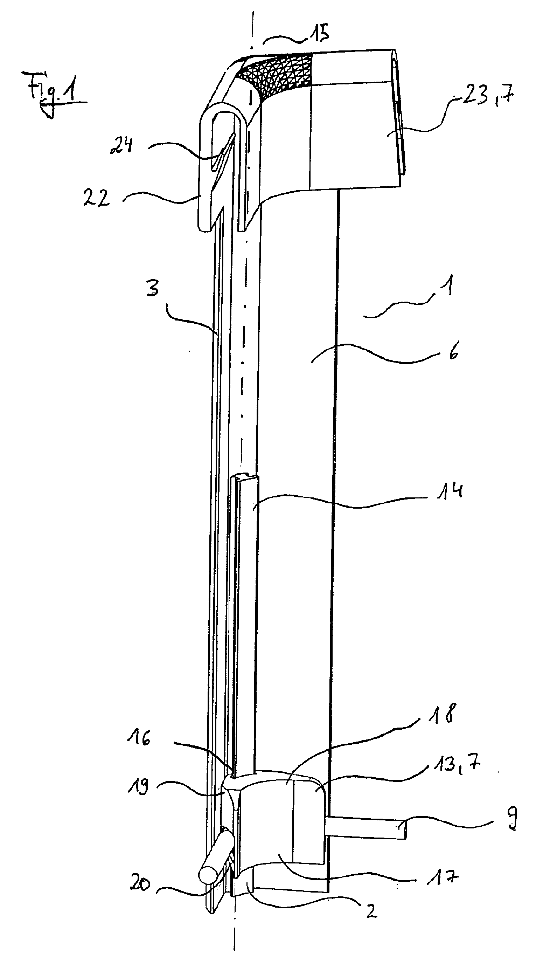

Fig. 1 zeigt in 3-D-Darstellung einen Eckprotektor 1 mit Befestigungsmitteln 7. Die Befestigungsmittel 7 sind in der Darstellung durch ein Raststück 13 und eine Einhängeöse 23 ausgeführt. Der Eckprotektor 1 ist mit dem Raststück 13 an einem quer verlaufenden Stab 9 eines nicht dargestellten Korbes 8, wie sie bei verschiedenen Arten von Einkaufswagen und weiterhin Transportwagen Verwendung finden, eingehängt. An der Innenseite 6 des Eckprotektors 1 ist eine Führung 14 entlang einer vertikalen Achse 15 des Eckprotektors 1 vorgesehen. Die Führung 14 ist in der dargestellten Form bündig mit dem unteren Ende 2 des Eckprotektors 1 und endet im oberen Abschnitt 3 des Eckprotektors 1. An der Führung 14 ist das Raststück 13 vorgesehen, das verschiebbar angeordnet ist. Die Führung 14 weist deshalb wenigstens eine Nut 16 zur Aufnahme des Raststückes 13 auf. Die Innenseite 17 des Raststückes 13 ist bogenförmig ausgeführt. Das Raststück 13 ist an seiner rechten Seite 18 mit einem bogenförmigen Übergang versehen. Weiterhin weist das Raststück 13 eine linke Seite 19 auf. Auch weist das Raststück 13 an der Außenseite 25 Klipse 20 auf, die das Raststück 13 an einem quer verlaufenden Stab 9 gegen Verrutschen und Verdrehen entlang der Führung 14 sichern.

Durch die geeignete Wahl der Befestigungsmittel 7, aus mindestens einem Raststück 13 mit Klipsen 20 an der Führung 14 angeordnet und einer Einhängeöse 23 am oberen Teil 22 des Eckprotektors 1, der mit Sicherungsvorrichtungen 24 an der Innenseite 6 des Eckprotektors 1 versehen ist, ist eine einfache Montage gegeben und ein problemloses Anpassen an verschiedene Körbe möglich.

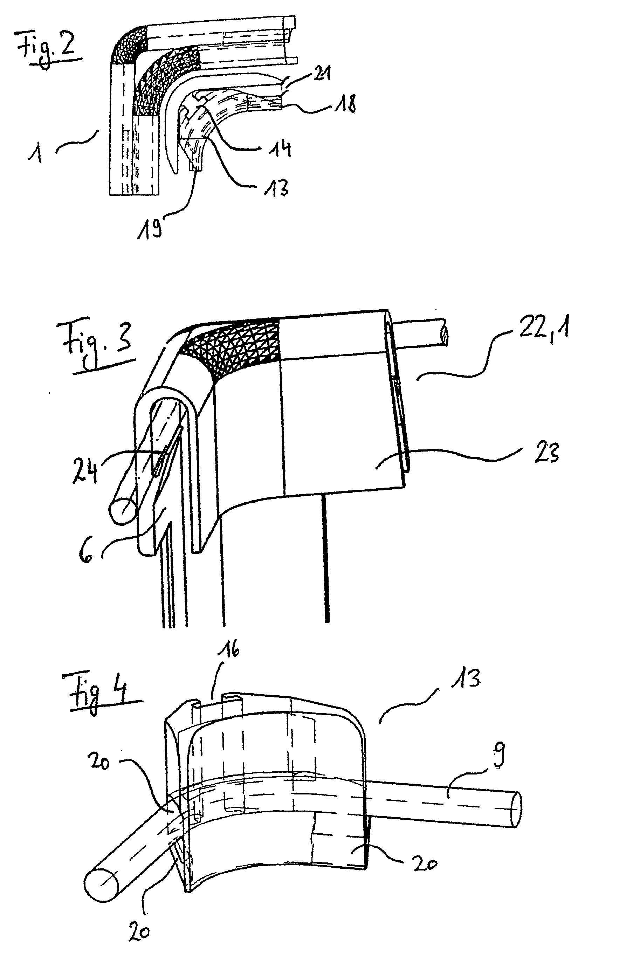

Fig. 2 zeigt in Draufsicht den Eckprotektor 1 mit dem höhenverstellbaren Raststück 13, das an der Führung 14 angeordnet ist. Die rechte Seite 18 des Raststückes 13 ist länger ausgeführt als die linke Seite 19. Der Eckprotektor 1 verjüngt sich jeweils an seinem äußeren Ende. Weiterhin ist ein Abstand 21 zwischen Raststück 13 und Eckprotektor 1 groß genug vorgesehen, dass ein Verschieben per Hand möglich ist.

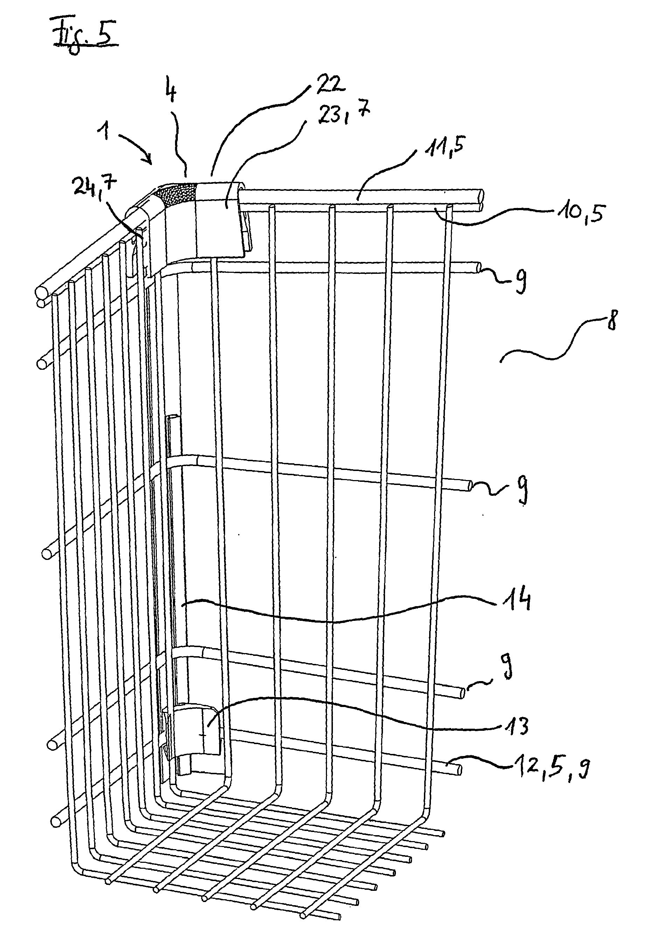

Fig. 3 zeigt in 3-D-Darstellung den oberen Teil 22 des Eckprotektors 1. Durch eine Einhängeöse 23 kann der Eckprotektor 1 in einen obersten quer verlaufenden Stab 11 eines Korbes 8 eingehängt werden und mittels einer Sicherungsvorrichtung 24 fixiert werden, siehe auch Fig. 5. Die Sicherungsvorrichtung 24 ist an der Innenseite 6 des Eckprotektors 1 vorgesehen und sichert den Eckprotektor 1 durch die schräg nach oben offene Ausführung an einem, nicht dargestellten, oberen quer verlaufenden Stab 10, wie auch in Fig. 5 dargestellt.

Fig. 4 zeigt ein Raststück 13 in 3-D-Darstellung mit einem quer verlaufenden Stab 9, der in die Klipse 20 eingerastet ist. Die Klipse 20 sind an der Außenseite 25 des Raststückes 13 vorgesehen und sowohl schräg und nach oben offen, als auch schräg und nach unten offen ausgeführt.

Fig. 5 zeigt in 3-D-Darstellung den Eckprotektor 1, eingehängt in eine vertikale Eckkante 4 eines Korbes 8. Das Raststück 13 ist an der Führung 14 angeordnet und eingerastet am untersten quer verlaufenden Stab 12 des Korbes 8. Die Einhängeöse 23, am oberen Teil des Eckprotektors 22, ist in den obersten quer verlaufenden Stab 11 eingehängt. Die Sicherungsvorrichtung 24 ist zur weiteren Fixierung an dem oberen quer verlaufenden Stab 10 angeordnet.

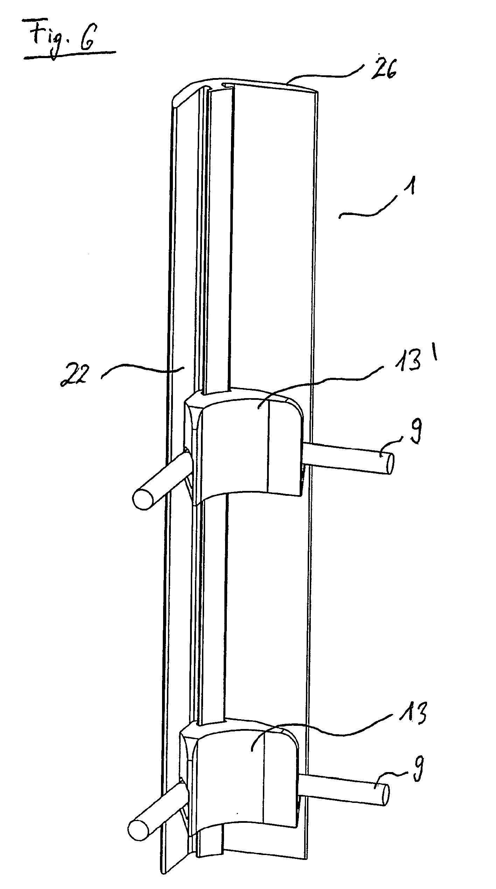

Fig. 6 zeigt in einer weiterführenden Ausführung den Eckprotektor 1, mit einem höhenverstellbaren Raststück 13 und einem weiteren Raststück 13', das ortsfest an der Führung 14 im oberen Teil 22 des Eckprotektors 1 angeordnet ist.

## Patentansprüche

1. Eckprotektor (1) mit Befestigungsmitteln (7) zum Anbringen an einer vertikalen Eckkante (4) eines aus Gitterstäben (5) gefertigten Korbes (8), der Bestandteil eines Einkaufswagens ist, wobei am Korb (8) quer verlaufende Stäbe (9) angeordnet sind, **dadurch gekennzeichnet, dass** ein Teil der Befestigungsmittel (7) durch ein Raststück (13) gebildet ist, das höhenverstellbar in mindestens einer am Eckprotektor (1) vorgesehenen Führung (14) angeordnet und zum Befestigen an einem der quer verlaufenden Stäbe (9) bestimmt ist.

2. Eckprotektor nach Anspruch 1 **dadurch gekennzeichnet, dass** das Raststück (13) eine Nut (16) aufweist, durch die das Raststück (13) manuell entlang der Führung (14) verschiebbar ist.

3. Eckprotektor nach Anspruch 1 oder 2 **dadurch gekennzeichnet, dass** die Führung (14) entlang einer vertikalen Achse (15) des Eckprotektors (1) angeordnet ist.

4. Eckprotektor nach Anspruch 1 oder 3 **dadurch gekennzeichnet, dass** die Führung (14) mit ihrem unteren Ende (2) bündig mit dem Eckprotektor (1) abschließt.

5. Eckprotektor nach Anspruch 1 **dadurch gekennzeichnet, dass** das Raststück (13) an seiner Innenseite (17) Klipse (20) aufweist.

6. Eckprotektor nach Anspruch 1 **dadurch gekennzeichnet, dass** ein weiterer Teil der Befestigungsmittel (7) durch eine halbrunde Einhängeöse (23) am oberen Teil (22) des Eckprotektors (1) gebildet ist.

7. Eckprotektor nach Anspruch 1 **dadurch gekennzeichnet, dass** ein weiterer Teil der Befestigungsmittel (7) durch mindestens eine Sicherungsvorrichtung (24) am oberen Teil (22) des Eckprotektors (1) gebildet ist.

8. Eckprotektor nach Anspruch 1 **dadurch gekennzeichnet, dass** ein weiterer Teil der Befestigungsmittel (7) durch ein weiteres ortsfestes Eckstück (13') gebildet ist.

## Claims

1. A corner protector (1) with fastening means (7) for attachment to a vertical corner edge (4) of a basket (8) which is manufactured from lattice bars (5) and forms part of a shopping trolley, wherein transversely extending bars (9) are arranged on the basket (8), **characterised in that** part of the fastening means (7) is formed by a locking piece (13) which is vertically adjustably arranged in at least one guide (14) provided on the corner protector (1) and which is intended to be fastened to one of the transversely extending bars (9).

2. A corner protector according to claim 1, **characterised in that** the locking piece (13) has a groove (16), by means of which the locking piece (13) is manually displaceable along the guide (14).

3. A corner protector according to claim 1 or 2, **characterised in that** the guide (14) is arranged along a vertical axis (15) of the corner protector (1).

4. A corner protector according to claim 1 or 3, **characterised in that** the lower end (2) of the guide (14) ends flush with the corner protector (1).

5. A corner protector according to claim 1, **characterised in that** the locking piece (13) has clips (20) on its inner surface (17).

6. A corner protector according to claim 1, **characterised in that** a further part of the fastening means (7) is formed by a semi-circular suspension eye (23) on the upper part (22) of the corner protector (1).

7. A corner protector according to claim 1, **characterised in that** a further part of the fastening means (7) is formed by the at least one securing device (24) on the upper part (22) of the corner protector (1).

8. A corner protector according to claim 1, **characterised in that** a further part of the fastening means (7) is formed by a further, fixed corner piece (13').

## Revendications

1. Protecteur de coin (1) avec des moyens de fixation (7) pour l'installer sur un bord de coin vertical (4) d'un panier (8) constitué de barreaux (5) qui fait partie d'un chariot à provisions, des barreaux (9) s'étendant transversalement étant disposés sur le panier (8), **caractérisé en ce qu'**une partie des moyens de fixation (7) est formée par une pièce d'enclenchement (13) qui est disposée à déplacement vertical sur au moins un guide (14) prévu sur le protecteur de coin (1) et qui est destinée à être fixée sur un des barreaux transversaux (9).

2. Protecteur de coin selon la revendication 1, **caractérisé en ce que** la pièce d'enclenchement (13) présente une rainure (16) par laquelle la pièce d'enclenchement (13) peut être coulissée manuellement le long du guide (14).

3. Protecteur de coin selon la revendication 1 ou 2, **caractérisé en ce que** le guide (14) est disposé le long d'un axe vertical (15) du protecteur de coin (1).

4. Protecteur de coin selon la revendication 1 ou 3, **caractérisé en ce que** le guide (14) se termine par son extrémité inférieure (2) à fleur du protecteur de coin (1).

5. Protecteur de coin selon la revendication 1, **caractérisé en ce que** la pièce d'enclenchement (13) présente des clips (20) sur son côté intérieur (17).

6. Protecteur de coin selon la revendication 1, **caractérisé en ce qu'**une autre partie des moyens de fixation (7) est formée par une boucle d'accrochage demi-ronde (23) sur l'élément supérieur (22) du protecteur de coin (1).

7. Protecteur de coin selon la revendication 1, **caractérisé en ce qu'**une autre partie des moyens de fixation (7) est formée par au moins un dispositif d'assujettissement (24) sur l'élément supérieur (22) du protecteur de coin (1).

8. Protecteur de coin selon la revendication 1, **caractérisé en ce qu'**une autre partie des moyens de fixation (7) est formée par une autre pièce d'angle fixe (13').
